Europäisches Patentamt

European Patent Office

Office européen des brevets

(11) Veröffentlichungsnummer: **0 075 726**
**A1**

(19)

(12) **EUROPÄISCHE PATENTANMELDUNG**

(21) Anmeldenummer: 82107724.5

(22) Anmeldetag: 23.08.82

(51) Int. Cl.³: **B 65 G 39/10**
**B 65 G 67/60**

(30) Priorität: 25.09.81 DE 3138192

(43) Veröffentlichungstag der Anmeldung:
06.04.83 Patentblatt 83/14

(84) Benannte Vertragsstaaten:
IT

(71) Anmelder: Conrad Scholtz AG
Am Stadtrand 55/59
D-2000 Hamburg 70(DE)

(72) Erfinder: Paelke, Jürgen
An der Este 13
D-2117 Tostedt(DE)

(74) Vertreter: Lieck, Hans-Peter
Dipl.-Ing. H.-P. Lieck Patentanwalt Maximiliansplatz 10
D-8000 München 2(DE)

(54) Umlenkvorrichtung für eine Gurtförderanlage.

(57) Eine Gurtförderanlage umfaßt einen in senkrechter Ebene schwenkbaren Ausleger (5) und ein am freien Ende desselben angelenktes, senkrechtes Tragegerüst (10). Der einzige Fördergurt (15) der Gurtförderanlage ist zwischen Ausleger (5) und Tragegerüst (10) mittels einer Umlenkvorrichtung (24) geführt, die für das Fördertrum (28) eine sogenannte Rollenkurve (41) umfaßt. Die Rollenkurve (41) setzt sich aus einem starren, mit dem Ausleger (5) verundenen Bogenabschnitt (42) und einem von diesem herabhängenden, kettenartigen Bogenabschnitt (43) zusammen, der sich beim Anheben des Auslegers (5) aufgrund einer keilförmigen Gestaltung seiner Kettenglieder (43) oder mittels einer am oberen Ende des Tragegerüstes (10) angebrachten Bogenschiene (55) in Bogenform anordnet, während er beim Absenken des Auslegers (5) in gerader, frei hängender Form in das Tragegerüst (10) eintaucht und deshalb dort zwischen den beiden Trumen (28; 29) des Fördergurtes (15) nur wenig Raum beansprucht.

FIG. 4

Dipl.-Ing. **H.-P. Lieck** Patentanwalt    Maximiliansplatz 10    D-8000 München 2

P 130 55 EP
Conrad Scholtz AG                — 1 —

## Beschreibung

Umlenkvorrichtung für eine Gurtförderanlage.

Die Erfindung betrifft eine Umlenkvorrichtung für eine
Förderanlage für Schüttgut nach dem Oberbegriff des Anspruches 1.

Derartige Umlenkvorrichtungen sind beispielsweise in in
einem Hafen installierten Förderanlagen zur Ent- oder Beladung von Schüttgut aus einem Schiff vorgesehen, wobei
die Förderanlage einen an einem Portal angelenkten Ausleger umfaßt, dessen freies Ende über ein Seil zwischen
einer unteren und einer oberen Endstellung verschwenkt
werden kann. An dem freien Ende des Auslegers ist um eine
vertikale Achse schwenkbar ein senkrechtes Tragegerüst
aufgehängt, an dessen unteren Ende die Aufnahme eines Schüttgutes beispielsweise aus einem Schiff erfolgt. Als Fördermittel ist dabei ein einziger Wellenkantengurt vorgesehen,
der vom unteren Ende des Tragegerüstes über den Ausleger
bis auf das Portal führt. Am Übergang vom oberen Ende des
Tragegerüstes zu dem freien Ende des Auslegers ist eine
Umlenkvorrichtung vorgesehen, bei der das Rücktrum des Fördergutes über eine einzige Umlenktrommel und das Fördertrum über mehrere parallel zueinander angeordnete Umlenkrollen in Form einer sogenannten Rollenkurve geführt ist.

Diese Umlenkvorrichtung weist aber einen Nachteil auf.
So beträgt beispielsweise der Winkel zwischen dem Ausleger und dem senkrechten Tragegerüst in der oberen Endstellung des Auslegers 30°, währenddessen dieser Winkel in der unteren Endstellung des Auslegers beispielsweise 110° aufweist. D.h., daß das Fördertrum in der oberen Endstellung des Auslegers um 150° und in der unteren Endstellung nur um 70° in die Senkrechte des Tragegerüstes umgelenkt werden muß. Sind aber die Umlenkrollen auf einem Kreisabschnitt von beispielsweise 150° starr angeordnet, so treten Probleme beim Senken des Auslegers auf. In diesem Falle nämlich muß ein hinreichend großer Abstand zwischen dem Rücktrum und dem Fördertrum im Bereich der Umlenkstelle vorgesehen sein, da beim Senken des Auslegers die auf einem Kreisabschnitt von beispielsweise 150° angeordneten Umlenkrollen vom freien Ende des Auslegers aus auf das Rücktrum hin verschoben werden, so daß das Ende der Rollenkurve im Bereich des oberen Endes des senkrechten Tragegerüstes, wenn der Abstand zwischen Förder- und Rücktrum nicht groß genug ist, das Rücktrum berührt und somit beschädigen kann.

Aufgabe der Erfindung ist es, eine Umlenkvorrichtung für eine Gurtförderanlage zwischen zwei, einen unterschiedlichen Winkel einschließende Förderstrecken zu schaffen, die einen minimalen Bauraum beansprucht.

Die Aufgabe wird erfindungsgemäß mit der im Anspruch 1 und bezülich vorteilhafter Ausgestaltungen im Sinne der Aufgabenstellung in den Unteransprüchen gekennzeichneten Umlenkvorrichtungen gelöst.

Mit der erfindungsgemäßen Umlenkvorrichtung ist es möglich, den Abstand zwischen dem Rück- und dem Fördertrum im Bereich des Auslegers, des senkrechten Tragegerüstes wie auch im Umlenkbereich konstant schmal zu halten. Dies wird dadurch möglich, daß die Rollenkurve für die Umlenkrollen an ihrem unteren Ende im Bereich des oberen Endes des senkrechten Tragegerüstes nicht starr, sondern flexibel so ausgebildet sind, daß zwar die Umlenkrollen in der oberen Endstellung alle auf einem Bogenabschnitt angeordnet sind, daß aber beim Absenken des Auslegers die unteren Umlenktrommeln nacheinander aufgrund des Schwerkraft senkrecht herabhängen.

In einer vorteilhaften Ausgestaltung der erfindungsgemäßen Umlenkeinrichtung nach Anspruch 2 ist dies dadurch möglich, daß die unteren Umlenktrommeln durch Kettenglieder miteinander verbunden sind, deren jeweilige Seitenflächen, die angrenzend zu einem benachbarten Kettenglied liegen, konisch zulaufen, so daß beim Anheben des Auslegers diese Kettenglieder, die die Umlenkrollen tragen, sich bogenförmig aneinander schließen.

In einer bevorzugten Ausführungsform nach Anspruch 3 sind dabei nur so viele Kettenglieder vorgesehen, daß die Umlenkung des Fördertrums in einer maximalen Betriebsstellung, in der Schüttgut aus einem großen Behälter, beispielsweise einem Schiff gefördert wird, nur über die starr befestigten Umlenkrollen erfolgt. In diesem Falle erfolgt die bogenförmige Aneinanderreihung aller Umlenkrollen nur in einer oberen Ruhestellung des Auslegers, in der er nicht fördert. Da in diesem Falle an dem Fördertrum nur erhebliche geringere Kräfte ansetzen als während des Förderbetriebes, brauchen die Kettenglieder bezüglich einer so großem Belastung nicht ausgelegt werden.

In einer vorteilhaften Ausgestaltung nach Anspruch 4 ist eine relativ zu dem am Ausleger befestigten starren Bogenabschnitt verschiebbare Bogenschiene vorgesehen, an der die kettenförmig miteinander verbundenen unteren Umlenkrollen mit ihren an den jeweiligen Stirnflächen der Umlenkrollen überstehenden Achsabschnitte beim Anheben des Auslegers zur Anlage kommen. Während des Hebevorganges des Auslegers werden so die unteren Umlenkrollen nacheinander auf die Bogenschiene aufgelegt, bis alle Umlenkrollen auf einem Kreisabschnitt in der oberen Endstellung des Auslegers angeordnet sind.

In einer vorteilhaften Ausgestaltung nach Anspruch 5 erfolgt dabei die Verschiebung der Bogenschiene in Abhängigkeit von der Stellung des Auslegers automatisch.

In einer bevorzugten Ausführungsform nach Anspruch 6 ist die verschiebbare Bogenschiene an dem senkrechten Tragegerüst befestigt. Die Anordnung ist dabei derart, daß der Kreismittelpunkt der Bogenschiene identisch ist mit dem auf einem Bogenabschnitt starr angeordneten Umlenktrommeln, so daß bei einem Heben und Senken des Auslegers die Bogenschiene automatisch so verschoben wird, daß der die Umlenkung des Fördertrums bewirkende Bogenabschnitt entsprechend jeder Stellung des Auslegers vergrößert bzw. verkleinert wird.

Weitere Ziele, Merkmale und Vorteile der Erfindung ergeben sich aus der folgenden Beschreibung der in den Zeichnungen dargestellten Ausführungsbeispiele. Dabei zeigen im einzelnen

Fig. 1      eine Förderanlage mit einer Umlenkeinrichtung

Fig. 2a bis 2c      schematisch eine erste Ausführungsform
der erfindungsgemäßen Umlenkeinrichtung
zwischen einem Ausleger und einem senkrechten Tragegerüst in verschiedenen Betriebsstellungen;

Fig. 3      eine schematische, vergrößerte Teilansicht der Umlenkeinrichtung;

Fig. 4      schematisch eine Seitenansicht einer zweiten Ausführungsform der erfindungsgemäßen
Umlenkvorrichtung zwischen dem Ausleger
und dem senkrechten Tragegerüst;

Fig. 5      einen Ausschnitt in der Umlenkvorrichtung nach Fig. 4 in einer Teilansicht.

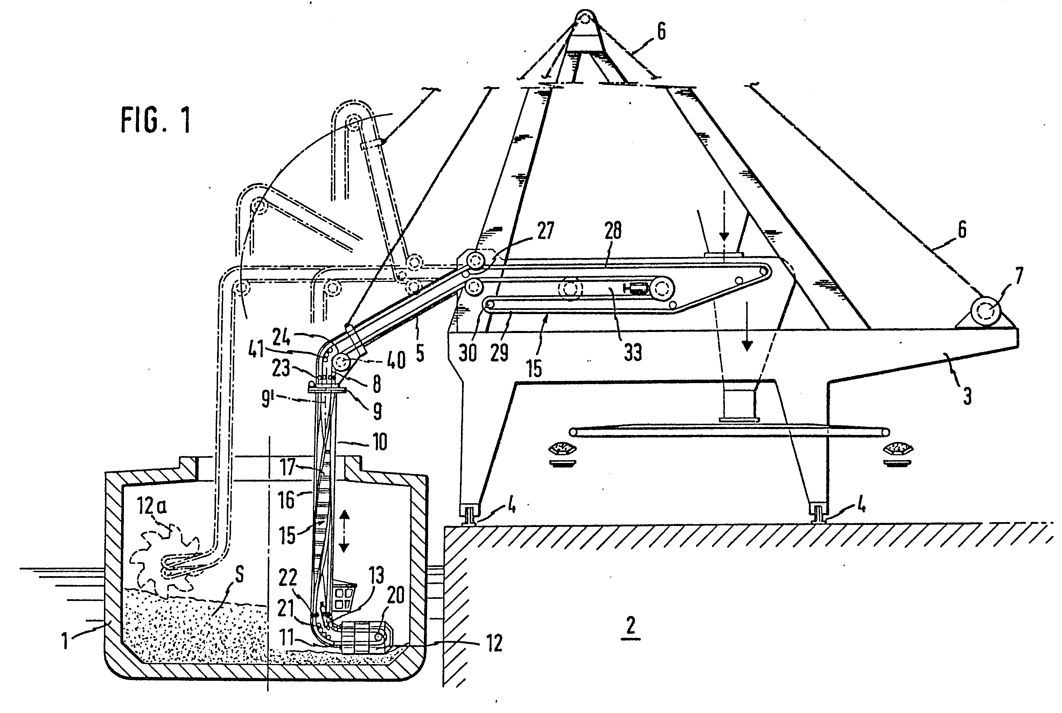

Die in Fig. 1 gezeigte Förderanlage für ein Schüttgut S, z.B. Kohle, ist in einem Hafen installiert und dient zur Entladung von Schiffen 1, die am Kai 2 liegen. Die Förderanlage umfaßt dabei ein Portal 3, das am Kai auf Schienen 4 längs des Schiffes 1 verfahrbar ist.

Auf dem Portal 3 ist ein Ausleger 5 angeordnet, der über das Schiff 1 reicht und in einer vertikalen Ebene um eine zu den Schienen 4 parallele Achse verschwenkbar ist. Hierbei ist der Ausleger 5 portalseitig an ein nicht näher gezeigtes Auslegergerüst angelenkt, das auf dem Portal quer zu den Schienen 4 in horizontaler Richtung verschiebbar ist, wodurch auch der Ausleger in jeder Schwenkstellung horizontal verlagerbar ist, wie es mit strichpunktierten Linien angedeutet ist. Die Verschwenkung des Auslegers 5 geschieht mittels eines Seiles 6, das zu einer Seilwinde 7 führt. An seinem freien Ende weist der Ausleger 5 ein Endstück 8 auf, das gegenüber dem eigentlichen Ausleger 5 um eine horizontale, zu den Schienen 4 parallele Querachse schwenkbar ist und in jeder Schwenkstellung des Auslegers senkrecht nach unten weist.

An dem Endstück 8 ist ein horizontaler Kugel-Drehkranz 9 angebracht, über welchen ein senkrechtes Tragegerüst 10 an dem Endstück 8 und damit dem Ausleger 5 aufgehängt ist. Der Drehkranz 9 definiert eine vertikale, durch seine Mitte gehende Schwenkachse 9', um welche das Tragegerüst 10 gegenüber dem Ausleger 5 schwenkbar ist. Fig. 1 zeigt das Tragegerüst strichpunktiert in sogenannter Normal-Stellung und ausgezogen in einer demgegenüber um 180° gedrehten Stellung.

Am unteren Ende ist an das Tragegerüst 10 ein kurzer Querausleger 11 angelenkt, der ein Schaufelrad 12 oder 12a für das Schüttgut S trägt.

Der Ausleger 5, sein Endstück 8 und das Tragegerüst 10 sind jeweils als selbsttragendes, geschlossenes Rohr ausgebildet. Alle Rohre haben den gleichen Durchmesser. Auch der Innendurchmesser des Drehkranzes 9 stimmt mit dem der Rohre überein. Am Übergang zwischen dem Ausleger 5 und seinem Endstück 8 und ebenso am Übergang zwischen dem Tragegerüst 10 und dem Querausleger 11 ist jeweils in nicht näher gezeigter Weise eine Lamellenabdeckung vorgesehen, welche den durch die Rohre gebildeten Raum auch am jeweiligen Übergang in jeder Schwenkstellung geschlossen hält.

- 7 -

Die Föreranlage ist mit einem einzigen, vom Aufnahmegerät 12 bis zum Portal 3 durchgehenden Fördergurt 15 versehen, der als sogenannter Wellenkantengurt ausgebildet ist, also zwei seitlich aufgesetzte Wellenkanten 16 aufweist, zwischen denen sich in regelmäßigem Längsabstand quer ausgerichtete Mitnehmer 17 befinden, die einen winkelförmige-Querschnitt haben und so zusammen mit den Wellenkanten becherförmige Kammern zur Aufnahme des Schüttgutes S bilden.

Im einzelnen ist der Fördergurt 15 von einer Endtrommel 20 am freien Ende des Querauslegers 11 über eine Umlenkvorrichtung 21 am Übergang vom Querausleger 11 zum Tragegerüst 10, eine unmittelbar anschließende, untere Führungseinrichtung 22, eine obere Führungseinrichtung 23 im Endstück 8, eine anschließende Umlenkeinrichtung 24 am Übergang zwischen dem Endstück und dem Ausleger 5 und über eine Umlenkeinrichtung 27 am Übergang zwischen Ausleger und Auslegergerüst zu einer am Portal gelagerten, angetriebenen Endtrommel 30 geführt.

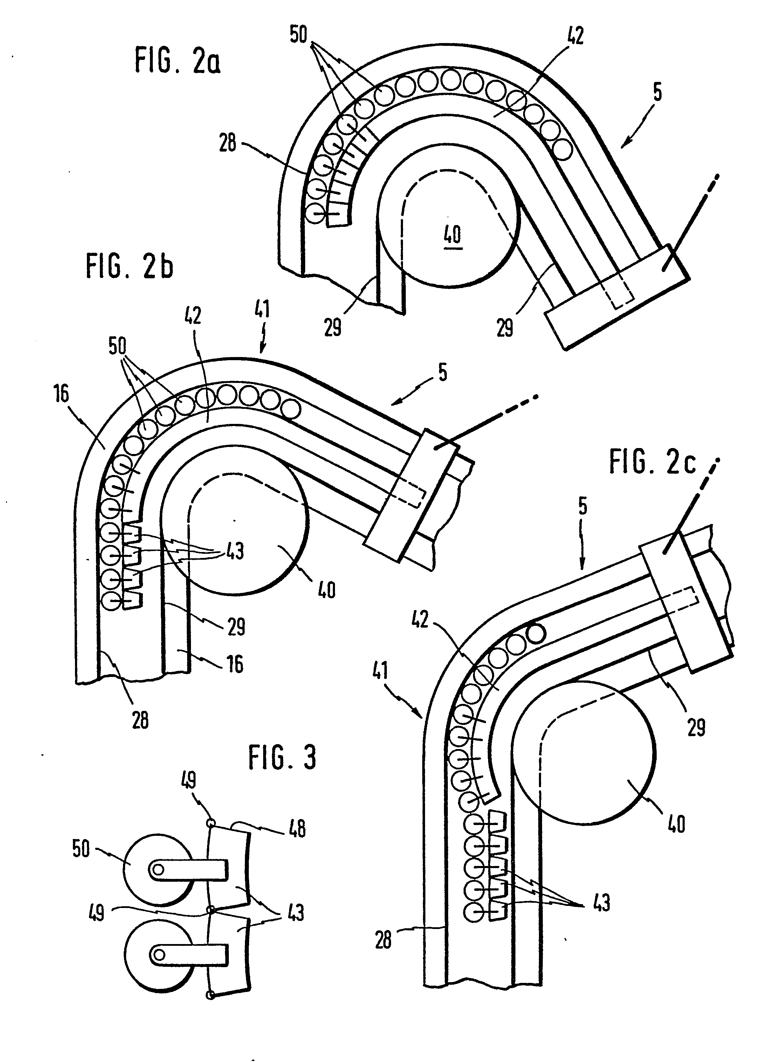

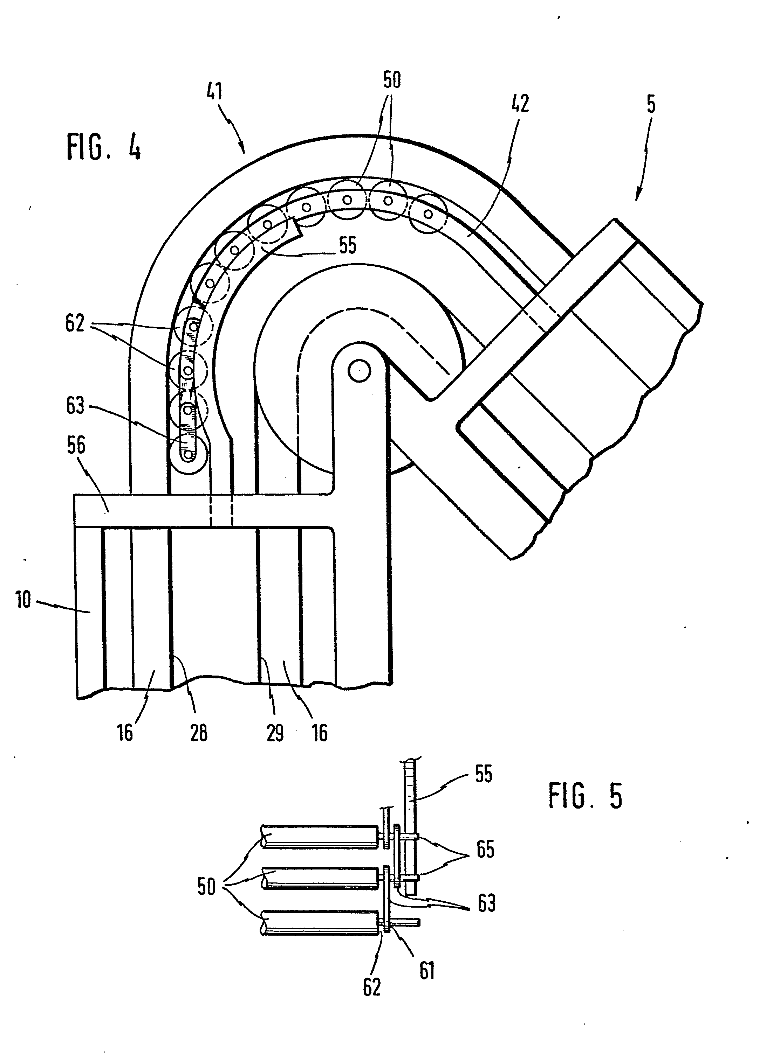

Dabei ist der Fördergurt 15 mit seinem Fördertrum 28 und seinem Rücktrum 29 innerhalb der Rohre des Tragegerüstes 10, des Endstückes 8 und des Auslegers 5 geführt. Die Umlenkeinrichtung 24 umfaßt eine Umlenktrommel 40 für den Rücktrum 29 und eine sogenannte Rollenkurve 41, um die der Fördertrum 28 geführt ist. Die Rollenkurve 41 setzt sich dabei, wie insbesondere aus den Fig. 2a - 2c hervorgeht, aus einem starren Bogenabschnitt 42 und Kettengliedern 43 zusammen, die am unteren Ende des Bogenabschnittes 42 angeordnet sind. Die Rollenkurve 41 umfaßt dabei entsprechend dem Umlenkbogen angeordnete Rollen mit vergleichsweise kleinem Durchmesser. Dabei ist der Bogenabschnitt 42 der einen Teil der Rollen trägt, an dem Ausleger 5 starr befestigt. Die Kettenglieder 43, die die restlichen Rollen tragen, sind vom unteren Ende des Bogenabschnittes 42 ausgehend aneinander angelenkt. Dabei weisen die Kettenglieder 43 konisch zulaufende Seitenflächen 48 auf, wodurch ein trapezförmiger Querschnitt gebildet wird. Die Kettenglieder sind dabei über Scharniere 49 miteinander verbunden, die an den Ecken des so gebildeten breiteren Basisabschnittes der Kettenglieder 43 angeordnet sind, wie insbesondere aus Fig. 3 hervorgeht.

In Fig. 2a ist der Ausleger 5 mit dem daran vorgesehenen Tragegerüst 10 in seiner oberen Ruhestellung gezeigt, in der kein Förderbetrieb stattfindet. Beim Anheben des Auslegers 5 in diese Ruhestellung kommen die Kettenglieder 43 mit ihren konischen Seitenflächen 48 an einem benachbarten Kettenglied 43 zur Anlage und bilden so einen maximalen Bogenabschnitt, um den der Fördertrum 28 umgelenkt wird. In dem gezeigten Ausführungsbeispiel wird dabei das Fördertrum 28 um ungefähr 150° vom Ausleger 5 zu dem senkrechten Tragegerüst 10 umgelenkt.

Fig. 2c zeigt den Ausleger 5 mit der Umlenkeinrichtung 24 in seiner unteren Endstellung, bei der die unteren Kettenglieder 43, die über die Scharniere 49 miteinander verbunden sind, aufgrund der Schwerkraft senkrecht herabhängen. Da deshalb die Rollenkurve 41 keinen großen Bauraum beansprucht, können das Rücktrum 28 und das Fördertrum 29 auch im Umlenkbereich mit einem vergleichsweise geringen Abstand zueinander geführt sein.

Fig. 2b zeigt eine maximale obere Betriebsstellung, in der noch ein Förderbetrieb durchgeführt wird. Dabei ist der starre Bogenabschnitt 42 so ausgeführt, daß in dieser oberen Betriebsstellung eine Umlenkung des Fördertrums 28 ausschließlich über die an dem starren Bogenabschnitt 42 angeordneten Rollen 50 erfolgt. Eine weitere Umlenkung auch über die in dieser oberen maximalen Betriebsstellung noch frei herabhängenden Rollen 50 , die an den Kettengliedern 43 hängen, erfolgt ausschließlich bei einer weiteren Verschwenkung in die obere Ruhestellung nach Fig. 2a. Aufgrund dieser Anordnung wird sichergestellt, daß im Gegensatz zur Ruhestellung die im Betrieb der Förderanlage an dem Fördertrum ansetzenden Kräfte lediglich über das starre Bogenglied 42 und nicht über die an den Kettengliedern 43 befestigten Rollen 50 abgestützt sind. Aufgrund dessen brauchen die Kettenglieder 43 nicht für die während des Förderbetriebes größeren Kräfte ausgelegt zu werden.

In den Fig. 4 und 5 ist ein anderes Ausführungsbeispiel gezeigt. Am unteren Ende des starr an dem Ausleger 5 befestigten Bogenabschnittes 42 der Rollenkurve 41 ist hier eine verschiebbare Bogenschiene 55 vorgesehen, die an dem oberen Ende 56 des enkrechten Tragegerüstes 10 befestigt ist. In diesem Ausführungsbeispiel sind die unteren Rollen 50 durch Kettenglieder 63 miteinander verbunden. Dazu sind an Stirnflächen 62 der Rollen 50 jeweils überstehende Achsabschnitte 65 vorgesehen, die durch Öffnungen 61 in den Kettengliedern 63 ragen.

In einer in Fig. 4 gezeigten Betriebsstellung hängen die durch die Kettenglieder 63 gehaltenen unteren Rollen 50 teilweise aufgrund der Schwerkraft senkrecht herab, weshalb der Abstand zwischen dem Rücktrum 29 und dem Fördertrum 28 hinreichend eng gehalten werden kann. Während eines Schwenkvorganges in die obere Ruhestellung werden die durch die Kettenglieder 63 an dem feststehenden Bogenabschnitt 42 gehaltenen unteren Rollen 50 relativ zu dem senkrechten Tragegerüst 10 angehoben, wobei die überstehenden Acgsabschnitte 65 an der äußeren Umfangslinie 68 der Bogenschiene 55 zur Anlage kommen, die an dem senkrechten Tragegerüst 10 befestigt ist. Aufgrund dieser Anordnung wird der Bogenabschnitt in der Umlenkvorrichtung 24 entsprechend jeder beliebigen Arbeitsstellung vergrößert bzw. verkleinert.

Das Ausführungsbeispiel nach den Figuren 4 und 5 erscheint derzeit als der beste Weg zur Ausführung der Erfindung.

Dipl.-Ing. H.-P. Lieck Patentanwalt    Maximiliansplatz 10    D-8000 München 2

P 130 55 EP
Conrad Scholtz AG

- 11 -

Ansprüche

1. Umlenkvorrichtung für eine Gurtförderanlage für Schüttgut mit einem um eine Drehachse zwischen einer unteren und einer oberen Endstellung verschwenkbaren Ausleger, an dessen freien Ende ein senkrechtes Tragegerüst aufgehängt ist, und mit einem in dem Ausleger und dem Tragegerüst vorgesehenen, ein Förder- und ein Rücktrum aufweisenden Fördergurt, wobei das Fördertrum zwischen dem oberen Ende des Tragegerüstes und dem freien Ende des Auslegers über mehrere, in Form einer Rollenkurve angeordneter Rollen umgelenkt wird, dadurch gekennzeichnet, daß die Rollenkurve (41) einen starren Bogenabschnitt (42) und im Bereich am oberen Ende des enkrechten Tragegerüstes (10) verschwenkbare Kettenglieder (43; 63) aufweist, die die Rollen (50) halten, und daß beim Verschwenken des Auslegers (5) in seine obere Endstellung nacheinander alle Kettenglieder (43; 63) über Haltemittel (konisch zulaufende Seitenwände 48; Bogenschiene 55) auf einem Kreisabschnitt angeordnet sind.

2. Umlenkvorrichtung nach Anspruch 1, dadurch gekennzeichnet, daß die Kettenglieder (43) konisch zulaufende Sei-

- 12 -

tenwände (48) aufweisen und an ihrem so gebildeten breiteren Basisabschnitt aneinander angelenkt sind (Scharniere 49).

3. Umlenkvorrichtung nach Anspruch 1 oder 2, dadurch gekennzeichnet, daß die Kettenglieder (43) in dem Bereich zwischen einer unteren und einer oberen maximalen Betriebsstellung aufgrund der Schwerkraft frei herabhängen.

4. Umlenkvorrichtung nach Anspruch 1, dadurch gekennzeichnet, daß die durch die Kettenglieder (63) gehaltenen Rollen (50) an ihren Stirnflächen (62) überstehende Achsenabschnitte (65) aufweisen, und daß als Haltemittel eine Bogenschiene (65) vorgesehen ist, die beim Anheben des Auslegers (5) von der unteren zur oberen Endstellung so ausfahrbar ist, daß an der Oberseite der Bogenschiene (55) die überstehenden Achsabschnitte (65) zur Anlage kommen.

5. Umlenkvorrichtung nach Anspruch 1 oder 4, dadurch gekennzeichnet, daß die Verstellung der verschiebbaren Bogenschiene (55) in Abhängigkeit von der Stellung des Auslegers (5) automatisch erfolgt.

6. Umlenkvorrichtung nach Anspruch 1, 4 oder 5, dadurch gekennzeichnet, daß der Kreismittelpunkt des starren Bogenabschnittes (42) identisch ist mit dem Kreismittelpunkt der Bogenschiene (55) und daß die Bogenschiene (55) an dem senkrechten Tragegerüst (10) starr befestigt ist.

FIG. 1

1/3

0075726

FIG. 2a

FIG. 2b

FIG. 2c

FIG. 3

FIG. 4

FIG. 5

| Europäisches Patentamt | **EUROPÄISCHER RECHERCHENBERICHT** | |
|---|---|---|

EP 82 10 7724.5

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | GB - A - 2 066 196 (OSAKEYHTIÖ) <br> * Fig. 1 * <br> — | 1 | B 65 G 39/10 <br> B 65 G 67/60 |
| A | DE - A1 - 2 932 113 (PHB WESERHÜTTE AG) <br> * Seite 6, Zeilen 7 bis 14 * <br> — | 1 | |
| A | DE - B - 1 259 781 (DEUTSCHE BUNDESPOST) <br> * Spalte 2, Zeilen 47 bis 52 * <br> — | 1 | **RECHERCHIERTE SACHGEBIETE (Int. Cl.³)** |
| A | FR - A - 862 899 (BUHLER FRERES) <br> — | | B 63 B 27/00 |
| A | GB - A - 795 973 (INTERNATIONAL COMBUS- TION HOLDINGS LTD.) <br> —— | | B 65 G 15/00 <br> B 65 G 17/00 <br> B 65 G 21/00 <br> B 65 G 39/00 <br> B 65 G 67/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-satze
E: älteres Patentdokument, das jedoch erst am oder nach dem Anmeldedatum veroffentlicht worden ist
D: in der Anmeldung angeführtes Dokument
L: aus andern Gründen ange-führtes Dokument
&: Mitglied der gleichen Patent-familie, übereinstimmendes Dokument

| X | Der vorliegende Recherchenbericht wurde für alle Patentansprüche erstellt. | |
|---|---|---|
| Recherchenort <br> Berlin | Abschlußdatum der Recherche <br> 29-11-1982 | Prüfer <br> SIMON |

EPA form 1503.1    06.78